# EUROPÄISCHE PATENTSCHRIFT

(11) **EP 2 618 008 B1**
(45) Veröffentlichungstag und Bekanntmachung des Hinweises auf die Patenterteilung: **18.12.2013**
(21) Anmeldenummer: 12152145.4
(22) Anmeldetag: 23.01.2012
(51) Int. Cl.: F16B 15/02

(54) **Befestigungsmittel zur Befestigung eines Holzbalkens und einer Betonplatte miteinander, Verfahren zur Befestigung eines Holzbalkens und einer Betonplatte miteinander sowie Bauelement in Form einer mit wenigstens einem Holzbalken verbundenen Betonplatte**
Means of fixing a wood truss to a concrete slab, method for fixing a wood truss to a concrete slab and construction element in the form of a concrete slab connected to at least one wood truss
Moyen de fixation pour la fixation d'une poutre en bois et d'une plaque en béton ensemble, procédé de fixation d'une poutre en bois et d'une plaque en béton ensemble ainsi que composant sous la forme d'une plaque en béton reliée à au moins une poutre en bois

(43) Veröffentlichungstag der Anmeldung: 24.07.2013
(73) Patentinhaber: Cemex Research Group AG, 2555 Brügg bei Biel (CH)
(72) Erfinder: Weidemann, Volker, 67310 Hettenleidelheim (DE)
(74) Vertreter: Berkenbrink, Kai-Oliver

(56) Entgegenhaltungen:
- CH-A- 379 734
- US-A- 5 031 378
- US-A- 5 673 525

## Beschreibung

Die Erfindung betrifft ein Befestigungsmittel zur Befestigung eines Holzbalkens und einer Betonplatte miteinander, ein Verfahren zur Befestigung eines Holzbalkens und einer Betonplatte miteinander sowie ein Bauelement in Form einer mit wenigstens einem Holzbalken verbundenen Betonplatte.

Bauelemente in Form von Betonplatten können im Gebäudebau insbesondere zur Erstellung von Decken oder Dächern verwendet werden. Zur Versteifung der Betonplatten werden diese regelmäßig mit Versteifungselementen in Form von Holzbalken oder Metallschienen verbunden.

Zur Befestigung der Versteifungsmittel und der Betonplatte miteinander werden Befestigungsmittel verwendet, die einerseits am Versteifungsmittel, andererseits in der Betonplatte befestigt werden.

Insbesondere die Befestigung des Befestigungsmittels in der Betonplatte ist häufig problematisch, da das Befestigungsmittel dazu neigt, aus der Betonplatte auszubrechen. Problematisch ist häufig ferner das Einführen des Befestigungsmittels in den noch nicht abgebundenen, angemachten Beton, und zwar insbesondere, wenn das Befestigungsmittel beim Einführen auf Kies oder Bewehrungsstahl stößt.

US 5,031,378 beschreibt ein Befestigungsmittel zur Befestigung eines festen Materials mit einem Dacheindeckungsmaterial. Das Befestigungsmittel weist eine Hülse mit einem hindurchgeführten Dorn auf, der derart ausgebildet ist, dass er bei einem Einziehen in die Hülse diese aufschneidet und umbiegt.

Der Erfindung liegt die Aufgabe zu Grunde, ein Befestigungsmittel zur Befestigung eines Holzbalkens und einer Betonplatte miteinander zur Verfügung zu stellen, durch das der Holzbalken und die Betonplatte sicher und einfach miteinander verbindbar sind.

Ferner liegt der Erfindung die Aufgabe zu Grunde, ein solches Befestigungsmittel zur Verfügung zu stellen, wobei sich das Befestigungsmittel besser in den Beton einführen lässt.

Eine weitere Aufgabe der Erfindung ist es, ein Verfahren zur Befestigung eines Holzbalkens und einer Betonplatte miteinander zur Verfügung zu stellen, durch das der Holzbalken und die Betonplatte einfach und sicher miteinander verbunden werden können.

Schließlich ist es eine Aufgabe der Erfindung, ein Bauelement in Form einer mit wenigstens einem Holzbalken verbundenen Betonplatte zur Verfügung zu stellen, bei dem der Holzbalken und die Betonplatte sicher miteinander verbunden sind.

Zur Lösung der beiden erstgenannten Aufgabe wird erfindungsgemäß zur Verfügung gestellt ein sich entlang einer Achse erstreckendes Befestigungsmittel zur Befestigung eines Holzbalkens und einer Betonplatte miteinander mit folgenden Merkmalen:
- Einem ersten Befestigungsbereich, der in einer Betonplatte befestigbar ist, und benachbart zu einem ersten axialen Ende des Befestigungsmittels ausgebildet ist;
- einem zweiten Befestigungsbereich, der in einem Holzbalken befestigbar ist, und benachbart zu einem zweiten axialen Ende des Befestigungsmittels ausgebildet ist, wobei
- das erste axiale Ende und das zweite axiale Ende die beiden gegenüberliegenden Enden des Befestigungsmittels bilden;
- einem zwischen dem ersten und zweiten Befestigungsbereich angeordneten Zwischenbereich, der zur Überbrückung des Übergangsbereiches zwischen der Betonplatte und dem Holzbalken ausgebildet ist, wobei
- der erste Befestigungsbereich
- einen ersten Abschnitt aufweist, der, von einem punktförmigen Bereich am ersten axialen Ende ausgehend, in Richtung auf das zweite axiale Ende sich erweiternd ausgebildet ist, und
- einen zwischen dem ersten Abschnitt und dem zweiten axialen Ende angeordneten zweiten Abschnitt aufweist, der in Richtung auf das zweite axiale Ende sich konisch verjüngend ausgebildet ist, und
- einen zwischen dem zweiten Abschnitt und dem zweiten axialen Ende angeordneten dritten Abschnitt aufweist, der in Richtung auf das zweite axiale Ende sich erweiternd ausgebildet ist.

Erfindungsgemäß wurde festgestellt, dass durch ein wie vorstehend ausgebildetes Befestigungsmittel ein Holzbalken und eine Betonplatte sicher und einfach miteinander verbindbar sind, wie nachfolgend näher dargestellt.

Ein weiterer besonderer Vorteil des erfindungsgemäßen Befestigungsmittels liegt auch darin, dass das Befestigungsmittel besonders einfach in den noch nicht abgebundenen, angemachten Beton, der nach seiner Abbindung eine Betonplatte bildet, einführbar ist.

Das erfindungsgemäße Befestigungsmittel ist einfach aufgebaut und dadurch günstig herstellbar.

Bevorzugt ist das erfindungsgemäße Befestigungsmittel ganz oder weitgehend rotationssymmetrisch zur Achse, entlang derer sich das Befestigungsmittel erstreckt, ausgebildet. Es erstreckt sich entlang dieser Achse von einem ersten Ende (erstes axiales Ende) zu einem gegenüberliegenden, zweiten Ende (zweites axiales Ende).

Das erfindungsgemäße Befestigungsmittel kann einteilig oder mehrteilig gestaltet sein.

Das erste axiale Ende des Befestigungsmittels, das gleichzeitig das axiale Ende des ersten Befestigungsbereich des Befestigungsmittels darstellt, ist punktförmig ausgebildet. Dieser punktförmige Bereich am ersten axialen Ende des Befestigungsmittels ist Teil des ersten Abschnittes des Befestigungsmittels. Insgesamt ist der erste Abschnitt bevorzugt spitz oder gewölbt, insbesondere konvex nach außen gewölbt, ausgebildet. Insgesamt ist der erste Abschnitt, ausgehend vom punktförmigen Bereich, in Richtung auf das zweite axiale Ende sich erweiternd ausgebildet. Besonders bevorzugt ist der erste Abschnitt sich konisch erweiternd ausgebildet, wobei die Außenfläche des sich konisch erweiternden ersten Abschnitts bevorzugt rotationssymmetrisch zur Achse des Befestigungsmittels ausgebildet ist. Danach weist der erste Abschnitt bevorzugt eine ganz oder im wesentlicnen kegelförmige Außenkontur auf. Die Kegelachse verläuft dabei bevorzugt konzentrisch zur Achse des Befestigungsmittels. Alternativ kann der erste Abschnitt beispielsweise eine (nach außen) gewölbte Außenkontur aufweisen. Ein entsprechend ausgebildeter erster Abschnitt hat den Vorteil, dass das Befestigungsmittel besonders einfach in einen noch nicht abgebundenen, angemachten Beton eingeführt werden kann, da der spitz zulaufende oder gewölbte erste Abschnitt im Beton vorhandene Elemente, wie beispielsweise Kies oder eine Betonbewehrung, beim Einführen zur Seite drücken oder entsprechenden Elementen ausweichen kann.

Die vom ersten Abschnitt gebildete Außenfläche ist dem zweiten axialen Ende und dem zweiten Befestigungsbereich abgewandt und damit, bei der Anwendung des Befestigungsmittels, der dem Holzbalken abgewandten Seite der Betonplatte zugewandt.

Bevorzugt ist vorgesehen, dass die Außenfläche des ersten Abschnitts, also die, die Außenkontur des ersten Abschnitts bildende Oberfläche, in einem Winkel im Bereich von 20° bis 60° zur Achse des Befestigungsmittels geneigt ist, besonders bevorzugt in einem Winkel im Bereich von 25° bis 55° oder von 30° bis 50°.

Der punktförmige Bereich beziehungsweise die Spitze des ersten Abschnitts kann, bei der Anwendung des Befestigungsmittels, die Betonplatte beziehungsweise den noch nicht abgebundenen Beton auf der dem Holzbalken abgewandten Seite der Betonplatte durchdringen, wobei diese Betonspitze auf Grund ihrer geringen Fläche optisch auf der dem Holzbalken abgewandten Seite der Betonplatte äußerlich kaum wahrnehmbar ist. Dies ist insbesondere unter ästhetischen Gesichtspunkten vorteilhaft, wenn die dem Holzbalken abgewandte Seite der Betonplatte eine Sichtseite darstellt.

Gleichzeitig kann das Befestigungsmittel die Betonplatte auf ihrer gesamten Dicke durchsetzen, so dass ein besonders fester Halt des Befestigungsmittels in der Betonplatte möglich ist.

Der zweite Abschnitt ist sich konisch verjüngend ausgebildet, betrachtet vom ersten Abschnitt in Richtung auf das zweite axiale Ende und damit auch auf den zweiten Befestigungsbereich hin. Die Außenfläche des zweiten Abschnitts, also die, die Außenkontur des zweiten Abschnitts bildende Oberfläche, ist bevorzugt rotationssymmetrisch zur Achse des Befestigungsmittels ausgebildet. Danach kann der zweite Abschnitt beispielsweise eine kegelstumpfförmige Außenkontur mit einer Kegelachse aufweisen, die konzentrisch zur Achse des Befestigungsmittels verläuft. Der zweite Abschnitt bildet bevorzugt einen ringförmigen Kragen beziehungsweise eine ringförmige schräge Außenfläche aus, die bevorzugt rotationssymmetrisch zur Achse des Befestigungsmittels verläuft.

Bevorzugt ist vorgesehen, dass die Außenfläche des zweiten Abschnitts in einem Winkel in einem Bereich von 30° bis 60° zur Achse des Befestigungsmittels geneigt ausgebildet ist, besonders bevorzugt in einem Winkel von 35° bis 55° oder von 40° bis 50°.

Die Außenfläche des zweiten Abschnitts ist dem Zwischenbereich und damit auch dem zweiten Befestigungsbereich zugewandt beziehungsweise, bei der Anwendung des Befestigungsmittels, der dem Holzbalken zugewandten Seite der Betonplatte zugewandt.

Der erste Abschnitt und der zweite Abschnitt können beabstandet voneinander ausgebildet sein. Bevorzugt ist jedoch vorgesehen, dass der erste Abschnitt und der zweite Abschnitt unmittelbar aneinander anschließen. Soweit der erste Abschnitt und der zweite Abschnitt jeweils eine konische Außenkontur aufweisen, können der erste Abschnitt und der zweite Abschnitt insgesamt die Außenkontur zweier gegeneinander gesetzter Kegel aufweisen. Dies hat insbesondere den Vorteil, dass der erste Abschnitt und der zweite Abschnitt sich gegenseitig stützen beziehungsweise verstärken.

Der zweite Abschnitt beziehungsweise die von dem zweiten Abschnitt gebildete Außenfläche hat insbesondere die Aufgabe, das Befestigungsmittel gegen ein Herausziehen des Befestigungsmittels aus der Betonplatte in Richtung des zweiten Befestigungsbereiches zu sichern, also gegen ein Herausziehen aus der Seite der Betonplatte, an der der Holzbalken an der Betonplatte angeordnet ist.

Auf Grund der Verjüngung des zweiten Abschnitts in Richtung zum zweiten Befestigungsbereich, weist die Außenfläche, die der zweite Abschnitt ausbildet, in Richtung des zweiten Befestigungsbereichs beziehungsweise in Richtung der Seite der Betonplatte, an der der Holzbalken angeordnet ist, so dass der zweite Abschnitt einen erheblichen Widerstand gegen ein Herausziehen in diese Richtung bildet.

Der zweite Abschnitt endet bevorzugt in einem, in Bezug auf die Achse des Befestigungsmittels radial außenliegenden kreisförmigen Rand beziehungsweise einer radial außenliegenden kreisförmigen Kante. Soweit der zweite Abschnitt sich unmittelbar an den ersten Abschnitt anschließt, können der erste Abschnitt und der zweite Abschnitt im Bereich dieser kreisförmigen Kante ineinander übergehen. Die Rotationsachse der radial außenliegenden kreisförmigen Kante läuft bevorzugt konzentrisch zur Achse des Befestigungsmittels.

Bekanntermaßen bricht ein in einem Beton verankertes Befestigungsmittel unter Bildung eines Ausbruchkegels aus dem Beton aus. Die Kraft, die zum Herausziehen des Befestigungsmittels aus dem Beton aufgewandt werden muss, entspricht der Kraft, die aufgewandt werden muss, um den Ausbruchkegel aus dem Beton herauszubrechen (Ausbruchkraft). Die aufzuwendende Ausbruchkraft ist umso größer, umso größer der Ausbruchkegel ausgebildet ist. Daher sollte ein Befestigungsmittel in einem Beton derart angeordnet sein, dass sich zum Herausziehen des Befestigungsmittels aus dem Beton ein möglichst großer Ausbruchkegel bildet.

Erfindungsgemäß ist der zweite Abschnitt des Befestigungsmittel derart ausgebildet, dass eine große Ausbruchkraft benötigt wird, um, bei der Anwendung des Befestigungsmittels, das Befestigungsmittel in Richtung auf das zweite axiale Ende aus der Betonplatte herauszuziehen, also aus der Seite der Betonplatte, auf der der Holzbalken angeordnet ist.

Ein Ausbruchkegel bildet sich von der Stelle aus, von der die Kraft, die an dem Befestigungsmittel angreift, in den Beton übertragen, beziehungsweise in diesen eingeleitet wird (Lasteinleitungsstelle). Erfindungsgemäß kann der zweite Abschnitt als Lasteinleitungsstelle ausgebildet sein. Konkret kann der zweite Abschnitt derart ausgebildet sein, dass die Last im Bereich des zweiten Abschnittes in die Betonplatte eingeleitet wird, wenn, bei der Anwendung des Befestigungsmittels, eine Kraft an dem Befestigungsmittel angreift, die vom zweiten Abschnitt zum zweiten axialen Ende beziehungsweise zu der Seite der Betonplatte hin wirkt, die dem Holzbalken zugewandt ist. Da die Lasteinleitungsstelle insbesondere an einem zur Kraftrichtung äußeren radialen Bereich liegt, liegt die Lasteinleitungsstelle bei dem Befestigungsmittel insbesondere im radial zur Achse des Befestigungsmittels äußeren Bereich des zweiten Abschnitts, insbesondere im Bereich der radial außenliegenden kreisförmigen Kante des zweiten Abschnitts.

Besonders vorteilhaft an der Ausbildung des zweiten Abschnitts als Lasteinleitungsstelle ist, dass der zweite Abschnitt, bei der Anwendung des

Befestigungsmittels, in den, dem Holzbalken abgewandten Bereich der Betonplatte angeordnet ist. Daher erstreckt sich zwischen dem zweiten Abschnitt und der Seite der Betonplatte, an der der Holzbalken angeordnet ist, ein Großteil der Dicke der Betonplatte, so dass der zweite Abschnitt in diese Richtung von einem Großteil der Dicke des Betons der Betonplatte überdeckt ist. Wird das Befestigungsmittel daher in Richtung auf das zweite axiale Ende durch eine Kraft belastet, bildet sich vom zweiten Abschnitt ein Ausbruchkegel aus, der vom zweiten Abschnitt bis zu der Seite der Betonplatte verläuft, die dem an diesem angeordneten Holzbalken zugewandt ist. Da dieser Ausbruchkegel über einen Großteil der Dicke der Betonplatte verläuft, ist eine hohe Ausbruchkraft zum Ausbrechen des Befestigungsmittels aus der Betonplatte aufzuwenden, so dass das Befestigungsmittel sehr fest in der Betonplatte befestigbar ist.

Nach einer Ausführungsform ist vorgesehen, dass das Befestigungsmittel derart ausgebildet ist, dass, bei der Anwendung des Befestigungsmittels, der Abstand zwischen der Seite der Betonplatte, die dem an der Betonplatte angeordneten Holzbalken zugewandt ist, und dem zweiten Abschnitt mindestens 50 %, besonders bevorzugt wenigstens 60 % der Dicke der Betonplatte entspricht.

Der zweite Abschnitt ist bevorzugt derart ausgebildet, dass er mit seiner Außenkontur die Außenkontur des ersten Befestigungsbereiches und des Zwischenbereiches in Radialrichtung zur Achse überragt beziehungsweise die zur Achse radial am weitesten außenliegende Kontur des ersten Befestigungsbereiches und des Zwischenbereiches bildet. Hinsichtlich des Zwischenbereichs gilt dies zumindest insoweit, soweit dieser bei der Anwendung des Befestigungsmittels zur Anordnung in der Betonplatte ausgebildet ist. Hierdurch ist sichergestellt, dass die durch den zweiten Abschnitt gebildete Außenfläche den Hauptwiderstand gegen ein Herausziehen des Befestigungsmittels aus der Seite der Betonplatte bildet, auf der der Holzbalken angeordnet ist und die Lasteintragsstelle damit im Bereich des zweiten Abschnitts liegt.

Bevorzugt ist vorgesehen, dass der zweite Abschnitt die Außenkontur des ersten Befestigungsbereiches (im Bereich zwischen dem zweiten Abschnitt und dem Zwischenbereich) und besonders bevorzugt auch die Außenkontur des Zwischenbereiches (zumindest soweit dieser bei der Anwendung des Befestigungsmittels zur Anordnung in der Betonplatte ausgebildet ist) in Radialrichtung zur Achse um wenigstens 25 % überragt, also beispielsweise auch um wenigstens 30 %, 35 %, 40 % oder 45 %.

Besonders bevorzugt ist vorgesehen, dass die kreisförmige Kante des zweiten Abschnitts die Außenkontur im vorgenannten Umfang überragt. Mit anderen Worten: Die kreisförmige Kante des zweiten Abschnitts liegt radial wenigstens im vorgenannten Umfang radial weiter von der Achse des Befestigungsmittels entfernt, als irgendeine weitere, die Außenkontur des ersten Befestigungsbereichs (im Bereich zwischen dem zweiten Abschnitt und dem Zwischenbereich) sowie des Zwischenbereiches (zumindest soweit dieser bei der Anwendung des Befestigungsmittels zur Anordnung in der Betonplatte ausgebildet ist) bildende Komponente.

Erfindungsgemäß wurde festgestellt, dass der zweite Abschnitt ein besonders gutes Hindernis gegen ein Herausziehen des Befestigungsmittels aus der Betonplatte in Richtung des zweiten axialen Endes darstellt, wenn der zweite Abschnitt in einem Mindestmaß radial gegenüber der Achse des Befestigungsmittels vorspringt. Ferner wurde festgestellt, dass der zweite Abschnitt möglichst in einem Höchstmaß gegenüber der Achse vorspringen sollte, um den Beton nicht zu sehr zu schwächen. Bevorzugt ist vorgesehen, dass der zweite Abschnitt gegenüber der Achse des Befestigungsmittels radial wenigstens um 8 mm vorspringt, also beispielsweise auch wenigstens 10 mm, 12 mm oder 14 mm. Ferner ist bevorzugt vorgesehen, dass der zweite Abschnitt gegenüber der Achse radial höchstens 25 mm vorspringt, also beispielsweise auch höchstens 22 mm, 20 mm, 18 mm oder 16 mm.

Da der zweite Abschnitt sich konisch erweiternd ausgebildet ist, kann die kreisförmige Kante des zweiten Abschnitts mit einem Radius im vorgenannten Bereich um die Achse des Befestigungsmittels verlaufen.

Der dritte Abschnitt ist sich erweiternd ausgebildet, betrachtet vom zweiten Abschnitt in Richtung auf das zweite axiale Ende. Besonders bevorzugt kann der dritte Abschnitt sich konisch erweiternd ausgebildet sein, wobei die Außenfläche des dritten Abschnitts bevorzugt rotationssymmetrisch zur Achse des Befestigungsmittels verläuft. Der dritte Abschnitt bildet mit seiner Außenfläche bevorzugt eine ringförmige Schulter beziehungsweise eine ringförmige schräge Fläche aus, bevorzugt rotationssymmetrisch zur Achse des Befestigungsmittels.

Die Außenfläche des dritten Abschnitts ist damit dem Zwischenbereich und damit auch dem zweiten Befestigungsbereich abgewandt, beziehungsweise, bei der Anwendung des Befestigungsmittels, der dem Holzbalken abgewandten Seite der Betonplatte zugewandt.

Bevorzugt ist vorgesehen, dass die Außenfläche des dritten Abschnitts in einem Winkel im Bereich von 30° bis 60° zur Achse des Befestigungsmittels geneigt ist, besonders bevorzugt in einem Winkel im Bereich von 35° bis 55° oder von 40° bis 50°.

Indem der zweite Abschnitt und der dritte Abschnitt sich verjüngend beziehungsweise sich erweiternd ausgebildet sind, werden auf den äußeren Oberflächen dieser Abschnitt schräge Flächen ausgebildet. Der Vorteil schräg ausgebildeter Flächen liegt insbesondere darin, dass diese besonders vorteilhaft als Lasteintragungsstelle wirken. Erfindungsgemäß wurde beispielsweise festgestellt, dass rechtwinklig zur Achse des Befestigungsmittels verlaufende Oberflächen entweder gar nicht als Lasteintragungsstelle wirken oder der Lasteintrag an einem undefinierbaren Bereich erfolgt. Bei erfindungsgemäß schräg verlaufenden Außenflächen nimmt ein Ausbruchkegel regelmäßig seinen Ausgangsbereich jedoch am äußeren radialen Rand der Flächen. Hierdurch kann ein großer Ausbruchkegel erzeugt werden, so dass eine hohe Ausbruchkraft benötigt wird, um das Befestigungsmittel aus der Betonplatte zu ziehen. Besonders vorteilhaft wirken der zweite Abschnitt und der dritte Abschnitt als Lasteintragungsstellen, wenn die Flächen dieser Abschnitte im beanspruchten Winkelbereich zur Achse des Befestigungsmittels verlaufen. Ein weiterer Vorteil der schrägen Flächen des zweiten und dritten Abschnitts liegt darin, dass die Ausbildung entsprechend verlaufender Abschnitte mit einer Materialersparnis gegenüber solchen Abschnitten verbunden ist, deren Oberflächen rechtwinklig zur Achse des Befestigungsmittels verlaufen.

Der erste, zweite und dritte Abschnitt können kontinuierlich oder gestuft sich verjüngend beziehungsweise sich erweiternd ausgebildet sein.

Der dritte Abschnitt hat insbesondere die Aufgabe, das Befestigungsmittel gegen ein Herausziehen in Richtung der dem Holzbalken abgewandten Seite der Betonplatte zu sichern, also aus der Seite der Betonplatte, die dem Holzbalken abgewandt ist. Auf Grund der durch die Erweiterung des dritten Abschnitts ausgebildeten, in Richtung der dem Holzbalken abgewandten Seite der Betonplatte zugewandten Außenfläche des dritten Abschnitts bildet der dritte Abschnitt einen Widerstand gegen ein Herausziehen des Befestigungsmittels in diese Richtung.

Erfindungsgemäß kann der dritte Abschnitt, ebenso wie der zweite Abschnitt, als Lasteinleitungsstelle ausgebildet sein. Konkret kann der dritte Abschnitt derart ausgebildet sein, dass die Last in dem Bereich des dritten Abschnitts in die Betonplatte eingeleitet wird, wenn, bei der Anwendung des Befestigungsmittels, eine Kraft an dem Befestigungsmittel angreift, die vom dritten Abschnitt zum ersten axialen Ende des Befestigungsmittel hin wirkt.

Es kann vorgesehen sein, dass das erfindungsgemäße Befestigungsmittel derart ausgebildet ist, dass, bei der Anwendung des Befestigungsmittels, der Abstand zwischen der Seite der Betonplatte, die dem Holzbalken abgewandt ist, und dem dritten Abschnitt wenigstens 50 % der Dicke der Betonplatte entspricht, besonders bevorzugt wenigstens einer Dicke von 60 % der Betonplatte.

Es kann vorgesehen sein, dass der dritte Abschnitt gegenüber der Achse des Befestigungsmittels radial wenigstens um 8 mm vorspringt, also beispielsweise auch wenigstens 5 mm, 7 mm oder 9 mm. Ferner kann vorgesehen sein, dass der dritte Abschnitt gegenüber der Achse des Befestigungsmittels radial um höchstens 15 mm vorspringt, also beispielsweise um höchstens 13 mm oder 11 mm.

Der Zwischenbereich des Befestigungsmittels ist derart ausgebildet, dass es die Querkräfte aufnehmen kann, die im Übergangsbereich zwischen dem Holzbalken und der Betonplatte auftreten, und diese insbesondere an den Holzbalken derart weiterleiten kann, dass dieser nicht beschädigt oder gar zerstört wird.

Hierzu weist der Zwischenbereich einen möglichst runden Querschnitt auf, bevorzugt einen zur Achse des Befestigungsmittels rotationssymmetrischen Querschnitt. Besonders bevorzugt weist der Zwischenbereich eine zylindrische Form auf, wobei die Zylinderachse konzentrisch zur Achse des Befestigungsmittels verläuft. Durch ein entsprechend ausgebildetes Zwischenstück können Querkräfte auf einer großen, gleichförmigen Fläche an den Holzbalken weitergeleitet werden, wobei Spannungsüberhöhungen auf Grund spitzer Kanten oder kleiner Radien des Zwischenbereiches vermieden werden. Besonders bevorzugt weist der Zwischenbereich, insbesondere soweit dieser zylindrisch ausgebildet ist, einen Radius von wenigstens 5 mm aus, also beispielsweise auch von wenigstens 7 mm, 9 mm, 12 mm oder 14 mm. Ferner weist der Zwischenbereich bevorzugt einen Radius von höchstens 25 mm auf, also beispielsweise auch von höchstens 20 mm, 16 mm, 13 mm oder 11 mm.

Soweit der Zwischenbereich eine zylindrische Form aufweist, zumindest auf seiner dem Holzbalken zugewandten Seite, kann bevorzugt vorgesehen sein, dass die dem Holzbalken zugewandte Außenkante des Zwischenbereichs abgerundet oder abgeschrägt ist. Hierdurch ist es leichter möglich, den Zwischenbereich in eine Öffnung des Holzbalkens einzuführen oder einzuschlagen.

Der Zwischenbereich weist bevorzugt eine Länge - in Richtung der Achse des Befestigungsmittels - von wenigstens 20 mm auf, besonders bevorzugt von wenigstens 25 mm oder 30 mm. Eine Maximallänge des Zwischenbereichs kann bevorzugt bei 70 mm liegen, also beispielsweise auch bei maximal 60 mm oder 50 mm.

Bevorzugt kann das Befestigungsmittel derart ausgebildet sein, dass die dem Holzbalken zugewandte Seite der Betonplatte im - in Richtung der Achse des

Befestigungsmittels mittleren Bereich des Zwischenbereiches angeordnet ist. Es kann vorgesehen sein, dass der Abstand zwischen dem mittleren Bereich des Zwischenbereiches und dem zweiten Abschnitt wenigstens 20 mm beträgt, bevorzugt wenigstens 30 mm und besonders bevorzugt wenigstens 35 mm. Ferner kann vorgesehen sein, dass der Abstand zwischen dem mittleren Bereich des Zwischenbereiches und dem zweiten Abschnitt höchstens 70 mm beträgt, bevorzugt höchstens 60 mm und besonders bevorzugt höchstens 55 mm.

Das Befestigungsmittel kann ein- oder mehrteilig ausgebildet sein und, soweit dieses mehrteilig ausgebildet ist, aus verschiedenen Materialien oder nur einem Material bestehen.

Bevorzugt ist vorgesehen, dass die Teile des Befestigungsmittels, die bei der Anwendung des Befestigungsmittels in Kontakt mit dem Beton der Betonplatte treten, aus einem Material bestehen, das in einem Beton verwendet werden kann, ohne von diesem angegriffen oder beschädigt zu werden. Bevorzugt bestehen die Teile des Befestigungsmittels, die bei der Anwendung des Befestigungsmittels in Kontakt mit dem Beton treten, aus einem in einem Beton beständigen Metall oder Kunststoff.

Nach einer bevorzugten Ausführungsform ist vorgesehen, dass der erste Bereich und der Zwischenbereich aus Kunststoff ausgebildet sind. Hierdurch kann eine Korrosion des ersten Bereiches und des Zwischenbereiches im Beton verhindert werden. Ferner können der erste Bereich und der Zwischenbereich aus Kunststoff sehr einfach und kostengünstig hergestellt werden.

Nach einer bevorzugten Ausführungsform ist vorgesehen, dass der erste Bereich und der Zwischenbereich monolithisch miteinander verbunden sind, also beispielsweise als einteiliger Kunststoffkörper ausgebildet sind.

Das Befestigungsmittel, Teile des Befestigungsmittels und insbesondere der erste Befestigungsbereich und der Zwischenbereich können insbesondere beispielsweise aus einem Kunststoff in Form eines thermoplastischen Polymers gefertigt sein, besonders bevorzugt aus einem glasfaserverstärkten thermoplastischen Polymer.

Vorteilhaft für die Befestigung des ersten Befestigungsbereichs in der Betonplatte kann es sein, wenn der zweite Abschnitt und der dritte Abschnitt einen Abstand von wenigstens 20 mm aufweisen, also beispielsweise auch von wenigstens 25 mm. Ferner kann es vorteilhaft sein, wenn der zweite Abschnitt und der dritte Abschnitt einen Abstand von höchstens 50 mm aufweisen, also beispielsweise auch von höchstens 40 mm oder höchstens 35 mm.

Der zweite Befestigungsbereich kann grundsätzlich jedes aus dem Stand der Technik bekannte Mittel sein, das in oder an einem Holzbalken befestigbar ist, beispielsweise eine Schraube, ein Befestigungsanker oder ein Befestigungsbolzen. Nach einer bevorzugten Ausführungsform kann der zweite Befestigungsbereich, zumindest in dem Bereich, mit dem er in Kontakt mit dem Holzbalken steht, aus Metall bestehen.

Soweit der zweite Befestigungsbereich nicht einstückig mit dem Zwischenbereich und/oder dem Befestigungsbereich ausgebildet ist, kann der zweite Befestigungsbereich mit dem Zwischenbereich und/oder dem Befestigungsbereich verbunden sein. Beispielsweise kann der zweite Befestigungsbereich form- oder kraftschlüssig mit dem Zwischenbereich und/oder dem Befestigungsbereich verbunden sein.

Nach einer Ausführungsform ist vorgesehen, dass der erste Befestigungsbereich und der Zwischenbereich aus Kunststoff ausgebildet sind und der zweite Befestigungsbereich aus Metall ausgebildet ist, wobei der erste Befestigungsbereich und der Zwischenbereich monolithisch miteinander verbunden sind. Der erste Befestigungsbereich und der Zwischenbereich sind mit ihrer Außenkontur bevorzugt rotationssymmetrisch zur Achse des Befestigungsmittels ausgebildet, da hierdurch ein besonders gleichmäßiger Lasteintrag in die Betonplatte erreicht wird.

Nach einer Ausführungsform ist vorgesehen, dass der Bereich des Befestigungsmittels, der zwischen dem zweiten Abschnitt und dem, dem zweiten axialen Ende des Zwischenbereichs zugewandten Ende des Zwischenbereiches verläuft, im wesentlichen zylindrisch, rotationssymmetrisch zur Achse des Befestigungsmittels ausgebildet ist und einen im Durchmesser verringerten Abschnitt, also eine Verjüngung, im Bereich zwischen dem zweiten Abschnitt und dem Zwischenbereich aufweist. Die sich dabei auf der Seite des Zwischenbereichs ausbildende, schräge Fläche dieses im Durchmesser verringerten Abschnittes kann dabei den dritten Abschnitt ausbilden.

Nach einer bevorzugten Ausführungsform ist vorgesehen, dass der erste Bereich und der Zwischenbereich, insbesondere soweit diese monolithisch miteinander verbunden sind, als Kunststoffhohlkörper ausgebildet sind, insbesondere als Kunststoffhohlkörper mit einer entlang der Achse des Befestigungsmittels ausgebildeten, insbesondere röhrenförmigen Durchgangsöffnung. Bei dieser Ausführungsform kann der zweite Befestigungsbereich derart durch diese Durchgangsöffnung geführt sein, dass er in der Durchgangsöffnung halterbar ist und diese mit einem Abschnitt überragt, der in einem Holzbalken befestigbar ist. Bei dieser Ausführungsform ist der zweite Befestigungsbereich bevorzugt als Holzschraube aus Metall ausgebildet. Dabei weist die Durchgangsöffnung einen Anschlag auf, bevorzugt eine Verjüngung des freien Querschnitts der Durchgangsöffnung, gegen die der Kopf der Schraube anliegt. Mit ihrem Gewinde überragt die Schraube die Durchgangsöffnung, so dass sie mit ihrem Gewinde in einen Holzbalken einschraubbar ist. Nach einer Fortführung dieser Ausführungsform kann insbesondere vorgesehen sein, dass die Schraube bevorzugt axial vom ersten axialen Ende in die Durchgangsöffnung einführbar ist. Hierzu kann am ersten axialen Ende eine Einführungsöffnung für die Schraube zur Einführung der Schraube in die Durchgangsöffnung ausgebildet sein. Diese Einführungsöffnung kann bevorzugt mit einem Verschluss, bevorzugt einer Kunststoffkappe, verschließbar sein, wenn die Schraube in die Durchgangsöffnung eingeführt ist und mit ihrem Schraubenkopf an dem Anschlag, insbesondere der Verjüngung des freien Querschnitts der Durchgangsöffnung, anliegt. Der Verschluss kann derart ausgebildet sein, dass er gegen den Schraubenkopf anliegt, wenn die Einführungsöffnung durch den Verschluss verschlossen ist.

Der Verschluss der Einführungsöffnung schützt die Schraube vor einem Kontakt mit Beton.

Nach einer Ausführungsform ist vorgesehen, dass der Anschlag für einen Schraubenkopf eines als Schraube ausgebildeten zweiten Befestigungsbereiches in dem Bereich der Durchgangsöffnung ausgebildet ist, der zwischen dem ersten axialen Ende und dem zweiten Abschnitt ausgebildet ist. Im Rahmen der Erfindung wurde festgestellt, dass Kräfte, die von dem Schraubenkopf an den ersten Befestigungsbereich übertragen werden, in diesem Bereich vorteilhaft derart über den Befestigungsbereich an den diesen umgebenden Beton der Betonplatte weitergeleitet werden können.

Erfindungsgemäß kann vorgesehen sein, dass der Anschlag für einen Schraubenkopf eines als Schraube ausgebildeten zweiten Befestigungsbereiches in Form einer konischen Verjüngung vorgesehen ist. Bevorzugt weicht der Winkel, in dem die konische Verjüngung zur Achse des Befestigungsmittels geneigt ist, nur höchstens 10° und besonders bevorzugt nur höchstens 5° oder nur höchstens 3° von dem Winkel ab, in dem ein konisch ausgebildeter zweiter Abschnitt zur Achse des Befestigungsmittels geneigt ist. Erfindungsgemäß wurde festgestellt, dass Kräfte, die von dem Schraubenkopf an den ersten Befestigungsbereich übertragen werden, bei einer entsprechend ausgebildeten Verjüngung besonders gleichmäßig über den Befestigungsbereich an den diesen umgebenden Beton der Betonplatte weitergeleitet werden können. Insbesondere wurde erfindungsgemäß festgestellt, dass bei einer entsprechend ausgebildeten Verjüngung eine Beschädigung des ersten Befestigungsbereiches durch den Schraubenkopf verhindert werden kann.

Zur Lösung der drittgenannten Aufgabe wird erfindungsgemäß zur Verfügung gestellt ein Verfahren zur Befestigung eines Holzbalkens und einer Betonplatte miteinander, wobei
- der Holzbalken zunächst an dem zweiten Befestigungsbereich des hierin beschriebenen Befestigungsmittels befestigt wird;
- der erste Befestigungsbereich des Befestigungsmittels anschließend derart in einen unabgebundenen, angemachte Beton, der nach der Abbindung eine Betonplatte bildet, eingeführt wird, dass der punktförmige Bereich des ersten Befestigungsbereichs den Beton vollständig durchdringt und der Zwischenbereich den Übergangsbereich zwischen dem Beton und dem Holzbalken überbrückt; und
- der Beton anschließend abbindet.

Zur Lösung der viertgenannten Aufgabe wird erfindungsgemäß zur Verfügung gestellt ein Bauelement in Form einer mit wenigstens einem Holzbalken verbundenen Betonplatte, wobei der Holzbalken und die Betonplatte über wenigstens ein hierin beschriebenes Befestigungsmittel miteinander verbunden sind.

Das Befestigungsmittel kann dabei derart mit dem Holzbalken und der Betonplatte verbunden sein, wie hierin im Zusammenhang mit der Anwendung des Befestigungsmittels beschrieben.

Dabei ist das Befestigungsmittel über den zweiten Befestigungsbereich in oder am Holzbalken befestigt. Der erste Befestigungsbereich ist im Beton befestigt. Dabei ist bevorzugt vorgesehen, dass das erste axiale Ende mit seinem punktförmigen Bereich, also mit seiner Spitze, an der, dem Holzbalken abgewandten Seite der Betonplatte liegt.

Der Holzbalken weist bevorzugt eine Öffnung, besonders bevorzgut ein Sackloch auf, in das der Zwischenbereich des Befestigungsmittels einführbar ist. Besonders bevorzugt weist der Holzbalken ein Sackloch mit einem zylindrischen Freiraum auf, wobei der Zylinderdurchmesser derart geringer ist als der Zylinderdurchmesser eines zylindrisch ausgebildeten Zwischenbereiches des Befestigungsmittels, dass der Zwischenbereich im Presssitz beziehungsweise unter Vorspannung im Sackloch einliegt. Hierdurch ist ein unmittelbarer Kraftschluss zwischen Befestigungsmittel und Holzbalken gegeben, so dass der Holzbalken sehr gut Querkräfte im Bereich zwischen Holzbalken und Betonplatte aufnehmen kann. Um den Zwischenbereich in ein derart ausgebildetes Sackloch einzuführen, kann er in das Sackloch eingeschlagen werden.

Bevorzugt ist das Bauelement derart ausgebildet, dass mehrere Holzbalken über jeweils mehrere Befestigungsmittel mit einer Betonplatte verbunden sind.

Nach einer Ausführungsform ist vorgesehen, dass zwischen der Betonplatte und dem Holzbalken eine Trennschicht angeordnet ist, beispielsweise ein Vlies. Diese Trennschicht kann beispielsweise sicherstellen, dass sich der Holzbalken beim Abbinden des Betons nicht mit diesem verbindet. Ferner kann eine Zwischenschicht beispielsweise als Feuchteschutz für den Holzbalken dienen. Bevorzugt weist die Trennschicht ein Dicke von höchstens mm, besonders bevorzugt von höchstens 2 mm auf.

Gemäß einer Ausführungsform ist vorgesehen, dass der Holzbalken zumindest abschnittsweise in der Betonplatte einliegt. Der Holzbalken kann demnach auf seiner der Betonplatte zugewandten Seite von der Betonplatte zumindest abschnittsweise eingefasst sein. Ein solches Einliegen des Holzbalkens in der Betonplatte hat insbesondere den besonderen Vorteil, dass der Holzbalken in dem der Betonplatte zugewandten Bereich vor einem seitlichen Ausbrechen geschützt ist, da er in diesem Bereich von dem Beton der Betonplatte seitlich eingefasst ist. Beispielsweise kann hierdurch ein Ausbrechen des Holzbalkens durch Querkräfte verhindert werden, die über den im Holzbalken einliegenden Zwischenbereich auf den Holzbalken übertragen werden. Es kann beispielsweise vorgesehen sein, dass der Holzbalken in einer Tiefe von wenigstens 4 mm, also beispielsweise auch wenigstens 6 mm oder wenigstens 8 mm in der Betonplatte einliegt. Ferner kann vorgesehen sein, dass der Holzbalken in einer Tiefe von höchstens 20 mm, also beispielsweise auch höchstens 15 mm oder höchstens 12 mm in der Betonplatte einliegt. Nach einer Ausführungsform ist vorgesehen, dass die Tiefe, in der der Holzbalken in der Betonplatte einliegt, nur höchstens 5 mm und besonders bevorzugt nur 3 mm von der Tiefe abweicht, in der der Zwischenbereich im Holzbalken einliegt.

Um den Holzbalken auf seiner der Betonplatte zugewandten Seite durch den Beton einfassen zu lassen, ist bevorzugt vorgesehen, dass der Holzbalken bei dem Verfahren zu seiner Befestigung mit einer Betonplatte in den unabgebundenen, angemachten Beton eingedrückt beziehungsweise eingetaucht wird. Dabei wird der Holzbalken in einer solchen Tiefe in den Beton eingetaucht, in der er nach Abbinden des Betons in der Betonplatte einliegen soll. Nach dem Abbinden des die Betonplatte bildenden Betons liegt der Holzbalken dann in der Tiefe, in der er in den Beton eingetaucht wurde, in der Betonplatte ein. Besondere Vorteile dieses Verfahrensschrittes liegen darin, dass der Holzbalken auf diese Art und Weise sehr einfach und ohne zusätzliche, aufwendige Verfahrensschritte in den Beton eingebracht werden kann, wobei die Betonplatte nach dem Abbinden des Betons den Holzbalken gleichzeitig lückenlos und fest einfasst.

Weitere Merkmale der Erfindung ergeben sich aus den Ansprüchen sowie den Figuren und der zugehörigen Figurenbeschreibung.

Sämtliche Merkmale der Erfindung können, einzeln oder in Kombination, beliebig miteinander kombiniert sein.

Ein Vorteil der Erfindung besteht darin, dass das Befestigungsmittel Zugkräfte entlang der Achse in beide Richtungen sowie Quer- und Horizontalkräfte aufnehmen kann.

Ein weiterer Vorteil besteht darin, dass die Tragfähigkeit und Steifigkeit eines unter Verwendung des Befestigungsmittels erstellten Bauelementes gegenüber solchen Bauelementen, bei denen ein Holzbalken und eine Betonplatte über eine Schraube nach dem Stand der Technik miteinander verbunden sind, um das zwei- bis fünffache erhöht ist. Dies liegt insbesondere auch an der tieferen Einbindung des Befestigungsmittels in den Beton sowie an dem größeren Widerstand, den das Befestigungsmittels aufgrund seiner größeren Fläche gegen ein Herausziehen bietet.

Ein Vorteil des Befestigungsmittels besteht ferner darin, dass die nötige Betondeckung und Höhentoleranz sicherstellt.

Schließlich besteht ein Vorteil der Erfindung darin, dass ein unter Verwendung des erfindungsgemäßen Befestigungsmittels zu erstellendes Bauelement sehr effektiv erstellt werden kann, indem das Befestigungsmittel bereits an dem Holzbalken befestigt wird und in einer Umflaufanlage just in time in den noch nicht abgebundenen Beton zur Erstellung der Betonplatte eingebracht wird.

Zwei stark schematisierte Ausführungsbeispiele der Erfindung werden anhand der nachfolgenden Figurenbeschreibung näher erläutert. Dabei zeigt
- Figur 1: eine Seitenansicht eines Befestigungsmittels,
- Figur 2: eine seitliche Schnittansicht auf das Befestigungsmittel gemäß Figur 1,
- Figur 3: das Befestigungsmittel gemäß Figur 2, das einen Holzbalken und eine Betonplatte miteinander verbindet,
- Figur 4: die Darstellung nach Figur 3, mit einem vom zweiten Abschnitt ausgehenden Ausbruchkegel,
- Figur 5: die Darstellung nach Figur 3, mit einem vom dritten Abschnitt ausgehenden Ausbruchkegel,
- Figur 6: das Befestigungsmittel gemäß Figur 2, das einen Holzbalken und eine Betonplatte miteinander verbindet, entlang einer anderen seitlichen Schnittansicht als gemäß Figur 3 und
- Figur 7: ein Befestigungsmittel in einer alternativen Ausführungsform in einer Darstellung gemäß Figur 2.

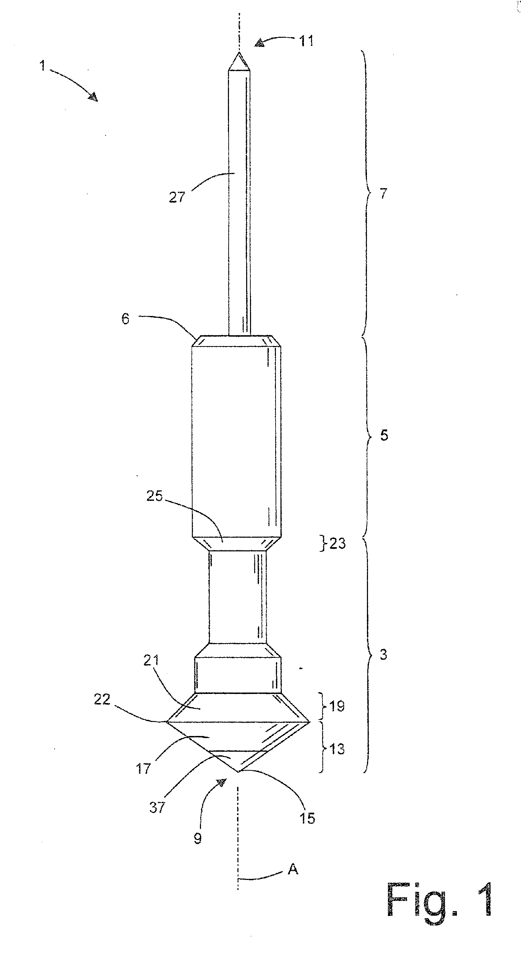

Das in Figur 1 insgesamt mit dem Bezugszeichen 1 gekennzeichnete Befestigungsmittel erstreckt sich entlang einer Achse A, die in der Zeichenebene liegt.

Das Befestigungsmittel 1 weist einen ersten Befestigungsbereich 3, einen zweiten Befestigungsbereich 7 sowie einen dazwischen angeordneten Zwischenbereich 5 auf. Der erste Befestigungsbereich 3 ist benachbart zu einem ersten axialen, in Figur 1 unteren Ende 9 und der zweite Befestigungsbereich 7 zu einem zweiten axialen, in Figur 1 oberen Ende 11 des Befestigungsmittels 1 ausgebildet.

Der erste Befestigungsbereich 3 sowie der Zwischenbereich 5 sind als Kunststoffhohlkörper ausgebildet, monolithisch miteinander verbunden und verlaufen rotationssymmetrisch zur Achse A.

Der erste Befestigungsbereich 3 weist einen ersten Abschnitt 13 auf, der von einem punktförmigen Bereich 15 am ersten axialen Ende 9 ausgehend, in Richtung auf das zweite axiale Ende 11 sich konisch erweiternd ausgebildet ist. Insgesamt weist der erste Abschnitt 13 damit die Form eines Kegels auf, dessen Achse konzentrisch zur Achse A des Befestigungsmittels 1 verläuft. Die Außenfläche 17 des ersten Abschnitts 13 ist in einem Winkel von 50° zur Achse A geneigt.

An den ersten Abschnitt 13 schließt sich unmittelbar ein zweiter Abschnitt 19 des ersten Befestigungsbereiches 3 an. Der zweite Abschnitt 19 ist in Richtung auf das zweite axiale Ende 11 sich konisch verjüngend ausgebildet. Die Außenfläche 21 des zweiten Abschnittes 19 verläuft rotationssymmetrisch zur Achse A und ist in einem Winkel von 45° zu dieser geneigt.

Mit Abstand zum zweiten Abschnitt 19 ist ein dritter Abschnitt 23 am ersten Befestigungsbereich 3 ausgebildet. Der dritte Abschnitt 23 ist in Richtung auf das zweite axiale Ende 11 sich konisch erweiternd ausgebildet. Die Außenfläche 25 des dritten Abschnitts 23 verläuft rotationssymmetrisch zur Achse A und ist mit einem Winkel von 45° zu dieser geneigt.

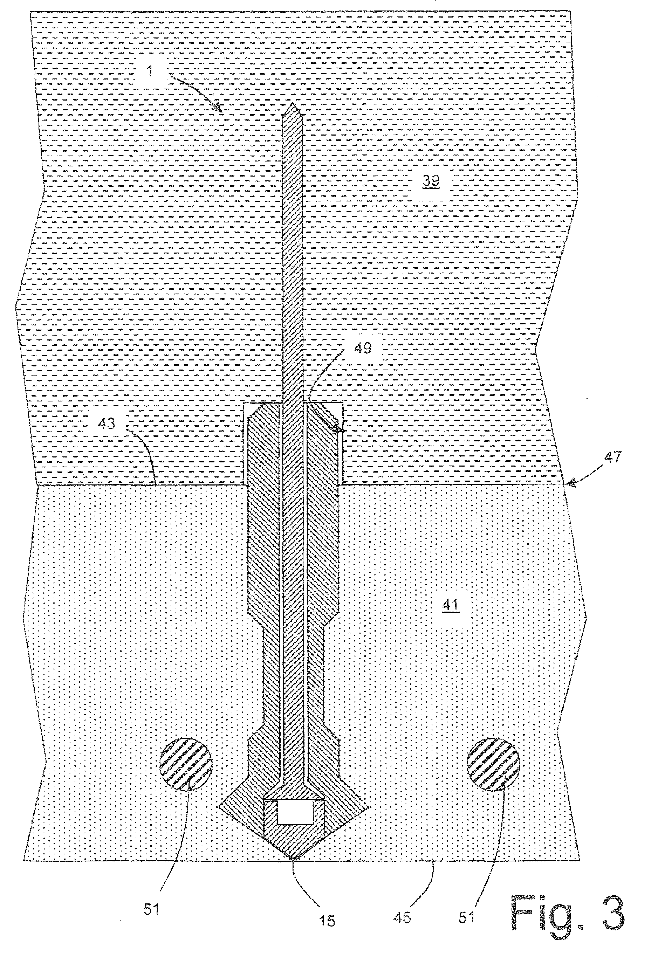

An den dritten Abschnitt 23 schließt sich in Richtung auf das zweite axiale Ende 11 unmittelbar der Zwischenbereich 5 an. Der Zwischenbereich 5 weist eine zylindrische Form auf, wobei die Zylinderachse koaxial zur Achse A des Befestigungsmittels 1 verläuft. Der Radius des Zylinders des Zwischenbereiches 5 entspricht dem Radius des dritten Abschnitts 23 an seinem radial zur Achse A am weitesten außenliegenden Umfang. Auf der dem Holzbalken 39 (siehe Figuren 3-6) zugewandten Seite ist die Außenkante 6 des Zwischenbereichs 5 abgeschrägt, so dass der Zwischenbereich 5 leichter in das Sackloch 49 (siehe Figuren 3-6) des Holzbalkens 39 eingeschlagen werden kann.

Der zweite Abschnitt 19 endet, im Bezug auf die Achse A des Befestigungsmittels 1, in einer radial außenliegenden kreisförmigen Kante 22, deren Rotationsachse konzentrisch zur Achse A verläuft.

Die Außenkontur des zweiten Abschnitts 19 ist derart ausgebildet, dass sie die radial zur Achse A am weitesten außenliegende Außenkontur des ersten Befestigungsbereich 3 sowie des Zwischenbereiches 5 bildet. Die Kante 22 weist, in Bezug auf die Achse A, einen Radius von 15 mm auf. Der nächstgrößere Radius einer Komponente im Bereich zwischen dem zweiten Abschnitt 19 und dem, dem zweiten axialen Ende 11 zugewandten Ende des Zwischenbereiches 5 liegt bei 10 mm (Radius des Zwischenbereiches 23), so dass die kreisförmige Kante 22 die Komponenten in diesem Bereich um 50 % überragt.

Der Abstand zwischen dem zweiten Abschnitt 19 und dem dritten Abschnitt 23 beträgt 28 mm.

Die Länge des ersten Befestigungsbereiches 3 beträgt 47 mm. Die Länge des Zwischenbereiches 5 liegt bei 36 mm.

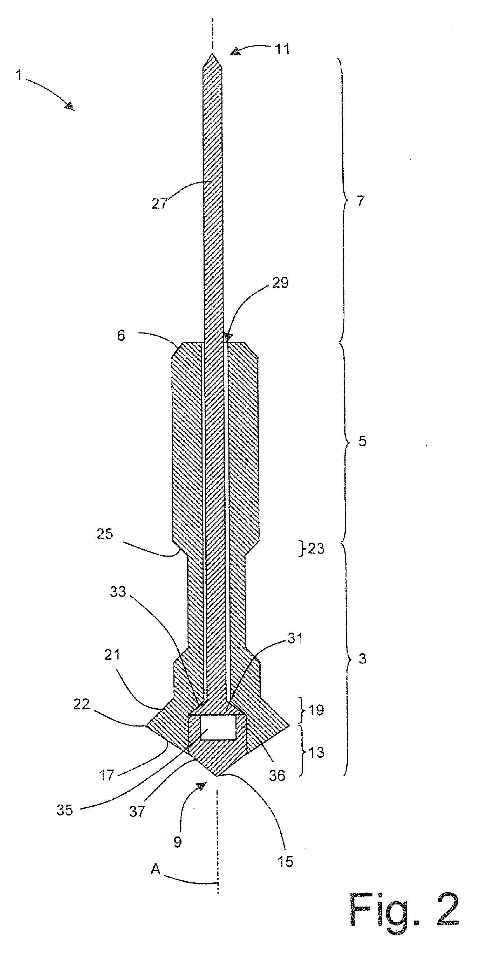

Der zweite Befestigungsbereich 7 ist als Holzschraube 27 aus Messing ausgebildet. Die Holzschraube 27 ist, wie Figur 2 zeigt, durch die axiale Durchgangsöffnung 29, die in dem ersten Befestigungsbereich 3 und dem Zwischenbereich 5 ausgebildet ist, geführt und liegt mit ihrem Schraubenkopf 31 gegen die Fläche einer Querschnittsverjüngung 33 der Durchgangsöffnung 29 an.

Figur 2 zeigt das Befestigungsmittel gemäß Figur 1 in einer Schnittansicht. Gut zu erkennen ist hier insbesondere auch, dass der Zwischenbereich 5 und der erste Befestigungsbereich 3 monolithisch miteinander verbunden sind. Insgesamt bilden der Zwischenbereich 5 und der erste Befestigungsbereich 3 einen Kunststoffhohlkörper durch dessen axiale, freie Durchgangsöffnung 29 die den zweiten Befestigungsbereich 7 ausbildende Messingschraube 27 geführt ist. Zur Einführung der Schraube 27 in die Durchgangsöffnung 29 ist am ersten axialen Ende 9 eine axiale Einführungsöffnung 35 ausgebildet, die derart dimensioniert ist, dass durch diese die Schraube 27 mit ihrem Kopf 31 in die Durchgangsöffnung 29 einführbar ist. An diese Einführungsöffnung 35 schließt sich axial die Durchgangsöffnung 29 mit einem im Durchmesser verringerten Querschnitt an, so dass die Schraube 27 mit ihrem

Schraubenkopf 31 gegen die Querschnittsverjüngung 33 im Übergangsbereich zwischen der Eingangsöffnung 35 und der Durchgangsöffnung 29 anliegt. Die Einführungsöffnung 35 ist durch eine Kunststoffkappe 37, die das spitze Ende des ersten Abschnitts 13 bildet, verschließbar, so dass der Schraubenkopf 31 bei der Anwendung des Befestigungsmittels 1 vor einem Kontakt mit Beton geschützt ist. Die Verschlusskappe 37 weist einen in Richtung des Schraubenkopfs 31 vorspringenden Abschnitt 36 auf, der in der Endposition der Verschlusskappe 37 gegen den Schraubenkopf 31 anliegt. Hierdurch ist die Verschlusskappe 37 einfach in eine definierte Endposition in die Eingangsöffnung 35 einsteckbar.

Die Schraube 27 durchdringt bei Anliegen des Schraubenkopfes 31 gegen die Querschnittsverjüngung 33 die Durchgangsöffnung 29 und überragt diese mit ihrem Gewinde, so dass dieses in einen Holzbalken einschraubbar ist.

Figur 3 zeigt das Befestigungsmittel gemäß den Figuren 1 und 2 bei der Anwendung, also der Verbindung eines Holzbalkens 39 und einer Betonplatte 41 über das Befestigungsmittel 1 miteinander. Der Holzbalken 39 und die Betonplatte 41 sind in Figur 3 nur abschnittsweise in dem Bereich, in dem diese über das Befestigungsmittel 1 miteinander verbunden sind, dargestellt. Insoweit ist ein Bereich eines Ausführungsbeispiels eines erfindungsgemäßen Bauelementes dargestellt.

Die Betonplatte 41 weist eine Seite 43 auf, die dem Holzbalken 39 zugewandt ist, und eine gegenüberliegende Seite 45 auf, die dem Holzbalken 39 abgewandt ist.

Das Befestigungsmittel 1 durchdringt die Betonplatte 41 vollständig, wobei es mit seinem punktförmigen Bereich 15 auf der dem Holzbalken 39 abgewandten Seite 45 der Betonplatte 41 liegt. Die Betonplatte 41 und das Befestigungsmittel 1 sind derart dimensioniert, dass der Übergangsbereich 47 zwischen der Betonplatte 41 und dem Holzbalken 39 durch den Zwischenbereich 5 überbrückt wird.

Der Holzbalken 39 weist eine zylindrische Sackbohrung 49 auf, die einen zylindrischen Freiraum aufweist, wobei der Zylinderdurchmesser etwa 3 % kleiner ist als der Zylinderdurchmesser des Zwischenbereichs 5. Hierdurch liegt der Zwischenbereich 5 unter Presssitz in der Sackbohrung 49 ein. Der Zwischenbereiches 5 überragt die Sackbohrung 49 auf der, der Betonplatte 41 zugewandten Seite des Holzbalkens 39. Indem der Zwischenbereich 5 unter Presssitz in der Sackbohrung 49 einliegt, können Querkräfte und Horizontalkräfte im Übergangsbereich 47 zwischen der Betonplatte 41 und dem Holzbalken 39 gut auf den Holzbalken 39 übertragen werden, ohne dass dieser beschädigt wird.

Die Holzschraube 27 ist mit ihrem Gewinde in den Holzbalken 39 eingeschraubt, wobei die Spitze der Schraube 27, die dem zweiten axialen Ende 11 des Befestigungsmittels 1 entspricht, im Holzbalken 39 endet.

In der Betonplatte 41 ist ein einliegender Bewehrungsstahl 51 schematisch dargestellt. Gut zu erkennen ist, dass das Befestigungsmittels 1 mit seinem spitz zulaufenden, ersten Abschnitt 13 dem Bewährungsstahl beim Einführen des Befestigungsmittels 1 in den noch nicht abgebundenen Beton, der die Betonplatte 41 bildet, ausweichen kann.

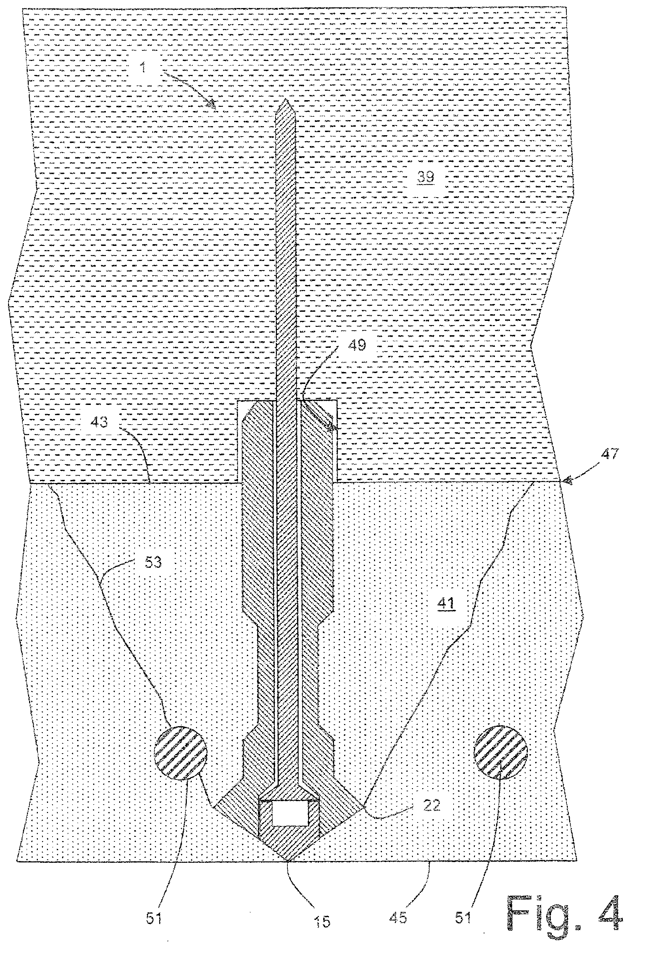

In Figur 4 ist schematisch dargestellt, wie der zweite Abschnitt 19 als Lasteintragungsstelle wirkt.

Wird das Befestigungsmittel 1 demnach durch eine Kraft belastet, die vom zweiten Abschnitt 19 in Richtung des zweiten axialen Endes 11 beziehungsweise in Richtung des Holzbalkens 39 wirkt, bildet sich bei Überschreiten einer Lastgrenze, ausgehend von der ringförmigen Kante 22 des zweiten Abschnitts 19, ein Ausbruchkegel 53 aus, der bis zu der Seite 43 der Betonplatte 41 verläuft, die dem Holzbalken 39 zugewandt ist. Da der zweite Abschnitt 19 in dem Bereich der Betonplatte 41 angeordnet ist, die dem Holzbalken 39 abgewandt, bildet sich ein verhältnismäßig großer Ausbruchkegel 53 aus, so dass eine große Ausbruchkraft benötigt wird, um das Befestigungsmittel 1 aus der Betonplatte 41 herauszuziehen. Das Befestigungsmittel 1 ist damit sehr fest in der Betonplatte 41 befestigt.

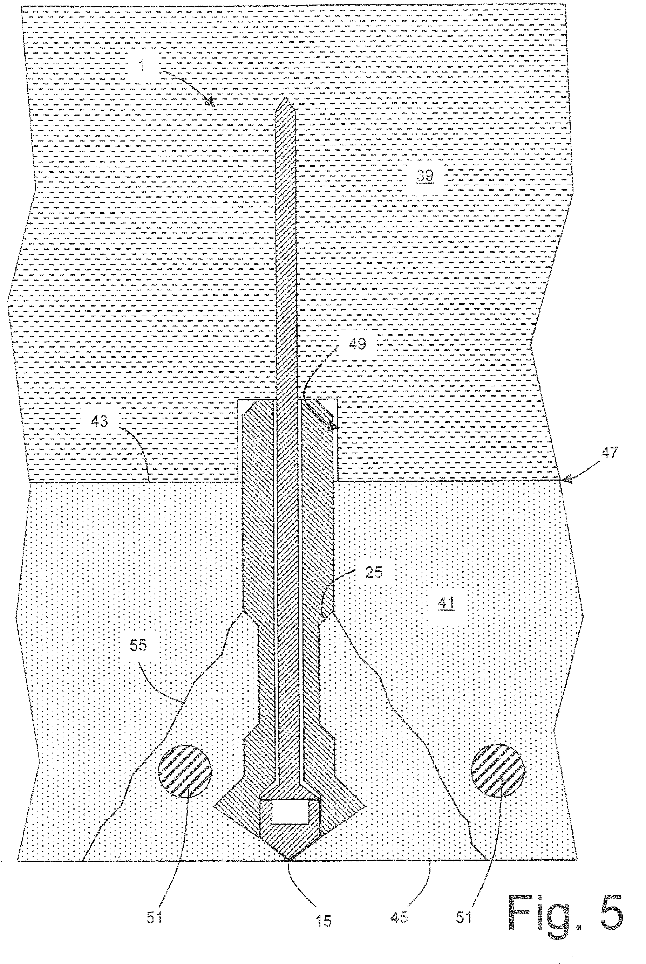

Figur 5 zeigt schließlich einen Ausbruchkegel 55, der von dem als Lasteintragungsstelle ausgebildeten dritten Abschnitt 23 ausgeht.

Zur Verbindung des Holzbalkens 39 mit der Betonplatte 41 wird wie folgt vorgegangen: Zunächst wird die Sackbohrung 49 in den Holzbalken 39 eingebracht, wobei die Dimension dieser Sackbohrung 49 der Außenkontur des Abschnitts des Zwischenbereiches 5 entspricht, um den der Zwischenbereich 5 die Betonplatte 41 bei der Befestigung darin überragen wird. Anschließend wird der Zwischenbereich 5 mit diesem Abschnitt in die Sackbohrung 49 eingeführt. Sodann wird die Schraube 27 durch die Einführungsöffnung 35 in die Durchgangsöffnung 29 eingeführt und in den Holzbalken 39 eingeschraubt, bis der Schraubenkopf 31 gegen die Querschnittsverjüngung 33 im Übergangsbereich zwischen der Einführungsöffnung 35 in der Durchgangsöffnung 25 anliegt. Daraufhin wird die Einführungsöffnung 35 durch die Kunststoffkappe 37 verschlossen. Anschließend wird das Befestigungsmittel 1 mit seinem den Holzbalken 39 überragenden Abschnitt in einen nicht abgebundenen, angemachten Beton eingeführt, wobei die Dicke des Betons der Länge entspricht, um die das Befestigungsmittel 1 den Holzbalken 39 überragt. Beim Einführen des Befestigungsmittel 1 in den Beton ist vorteilhaft, dass das Befestigungsmittel 1 an seinem ersten Abschnitt 13 spitz zulaufend ausgebildet ist, so dass es den Bewehrungsstahl 51 in dem die Betonplatte 41 ausgebildeten Beton beim Einführen ausweichen kann. Nach dem Abbinden des Betons bildet dieser die Betonplatte 41 aus, so dass das Befestigungselement 1 in der Betonplatte 41 und dem Holzbalken 39 befestigt ist und diese fest miteinander verbindet.

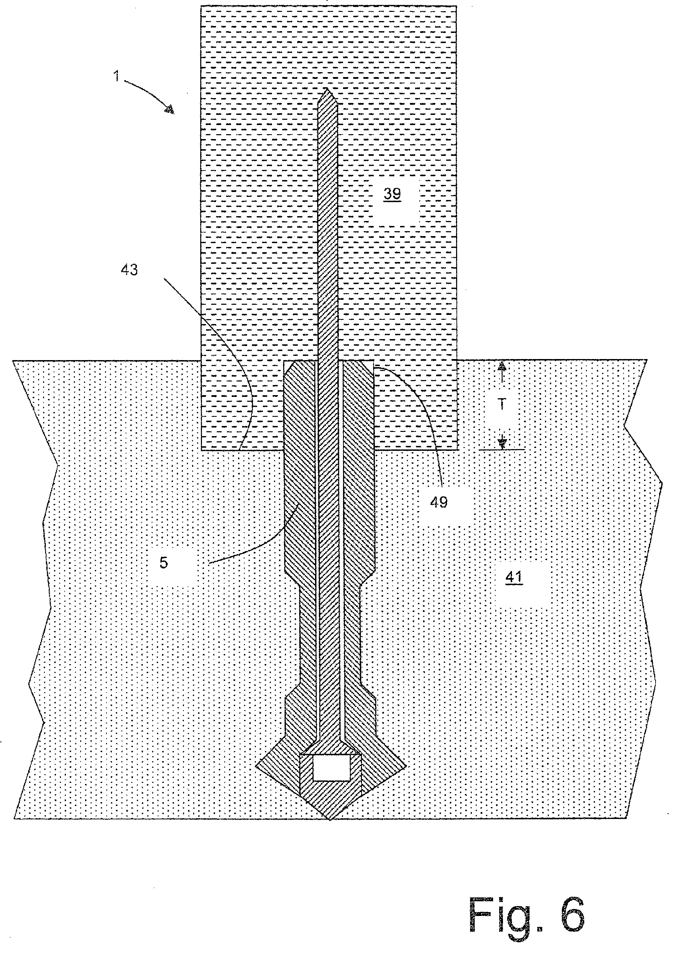

Während die Figuren 3 bis 5 einen Bereich eines Ausführungsbeispiels eines erfindungsgemäßen Bauelementes in einer seitlichen Schnittansicht entlang der Längserstreckung des Holzbalkens 39 darstellen, ist in Figur 6 ein Bereich des Bauelementes in einer seitlichen Schnittansicht senkrecht zur Längserstreckung des Holzbalkens 39 dargestellt. Deutlich zu erkennen ist, das der Holzbalken 39 auf seiner der Betonplatte 41 zugewandten Seite 43 in der Tiefe T in der Betonplatte 41 einliegt, die der Tiefe entspricht, in der der Zwischenbereich 5 im Sackloch 49 einliegt.

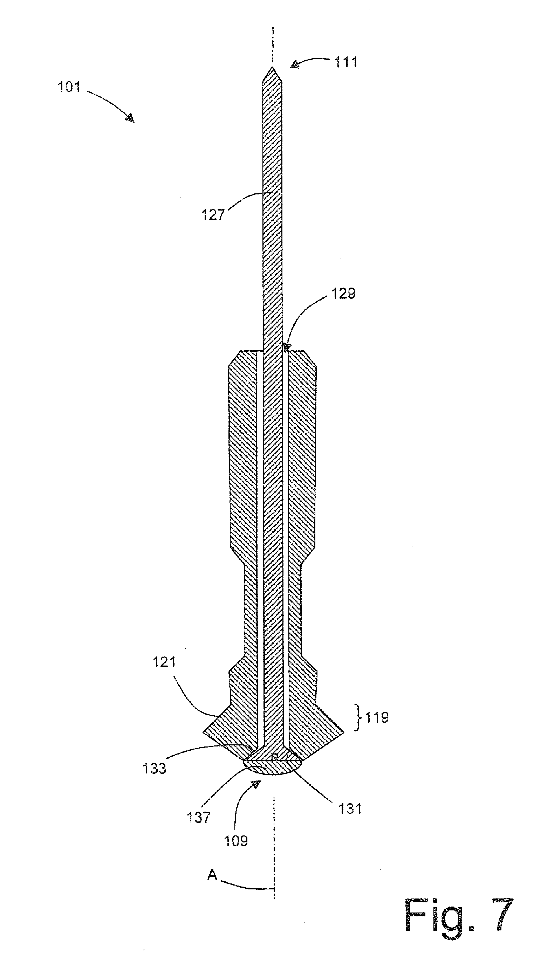

Bei dem Ausführungsbeispiel des Befestigungsmittel 101 gemäß Figur 7 ist der zum ersten axialen Ende 109 benachbarte Bereich alternativ gestaltet. So ist bei diesem Ausführungsbeispiel die als Anschlag 133 für den Schraubenkopf 131 der Schraube 127 ausgebildete Querschnittsverjüngung in dem Bereich der Durchgangsöffnung 129 ausgebildet ist, der zwischen dem ersten axialen Ende 109 und dem zweiten Abschnitt 119 ausgebildet ist. Der Anschlag 133 ist konisch in einem Winkel von 45° zur Achse 111 geneigt, entsprechend dem Winkel, in dem der zweite Abschnitt 119 zur Achse 111 geneigt ist.

Ferner weist die, die Einführungsöffnung 135 verschließende Kunststoffkappe 137 eine nach außen gewölbte Form auf, so dass das durch die Kunststoffkappe 137 gebildete, erste axiale Ende 109 nicht spitz, sondern gewölbt endet.

## Patentansprüche

1. Befestigungsmittel zur Befestigung eines Holzbalkens (39) und einer Betonplatte (41) miteinander, das sich entlang einer Achse (A) erstreckt, mit folgenden Merkmalen:
1.1 einem ersten Befestigungsbereich (3), der in einer Betonplatte (41) befestigbar ist, und benachbart zu einem ersten axialen Ende (9) des Befestigungsmittels ausgebildet ist;
1.2 einem zweiten Befestigungsbereich (7), der in einem Holzbalken (39) befestigbar ist, und benachbart zu einem zweiten axialen (11) Ende des Befestigungsmittels ausgebildet ist, wobei 1.3 das erste axiale Ende (9) und das zweite axiale Ende (11) die beiden gegenüberliegenden Enden des Befestigungsmittels bilden;
1.4 einem zwischen dem ersten und zweiten Befestigungsbereich (3, 7) angeordneten Zwischenbereich (5), der zur Überbrückung des Übergangsbereiches (47) zwischen der Betonplatte (41) und dem Holzbalken (39) ausgebildet ist, wobei
1.5 der erste Befestigungsbereich (3)
1.5.1 einen ersten Abschnitt (13) aufweist, der, von einem punktförmigen Bereich (15) am ersten axialen Ende (9) ausgehend, in Richtung auf das zweite axiale Ende (11) sich erweiternd ausgebildet ist, und
1.5.2 einen zwischen dem ersten Abschnitt (13) und dem zweiten axialen Ende (11) angeordneten zweiten Abschnitt (19) aufweist, der in Richtung auf das zweite axiale Ende (11) sich verjüngend ausgebildet ist, und
1.5.3 einen zwischen dem zweiten Abschnitt (19) und dem zweiten axialen Ende (11) angeordneten dritten Abschnitt (23) aufweist, der in Richtung auf das zweite axiale Ende (11) sich erweiternd ausgebildet ist,
**dadurch gekennzeichnet, dass** der zweite Abschnitt (19) in Richtung auf das zweite axiale Ende (11) sich konisch verjüngend ausgebildet ist.

2. Befestigungsmittel nach Anspruch 1, bei dem der zweite und der dritte Abschnitt (19, 23) Außenflächen ausbilden, die in einem Winkel im Bereich von 30 bis 60 ° zur Achse (A) geneigt sind.

3. Befestigungsmittel nach wenigstens einem der vorhergehenden Ansprüche, bei dem die Außenkontur des zweiten Abschnitts (19) die Außenkontur des ersten Bereichs (3) und des Zwischenbereichs (5) in Radialrichtung zur Achse (A) überragt.

4. Befestigungsmittel nach wenigstens einem der vorhergehenden Ansprüche, bei dem der erste Befestigungsbereich (3) und der Zwischenbereich (5) aus Kunststoff ausgebildet sind.

5. Befestigungsmittel nach wenigstens einem der vorhergehenden Ansprüche, bei dem der erste Befestigungsbereich (3) und der Zwischenbereich (5) monolithisch miteinander verbunden sind.

6. Befestigungsmittel nach wenigstens einem der vorhergehenden Ansprüche, bei dem der erste Befestigungsbereich (3) und der Zwischenbereich (5) eine rotationssymmetrisch zur Achse (A) ausgebildete Außenkontur aufweisen.

7. Verfahren zur Befestigung eines Holzbalkens (39) und einer Betonplatte (41) miteinander, wobei
7.1 der Holzbalken (39) zunächst mit dem zweiten Befestigungsbereich (7) des Befestigungsmittels (1) nach wenigstens einem der vorhergehenden Ansprüche verbunden wird,
7.2 der erste Befestigungsbereich (3) des Befestigungsmittels (1) anschließend derart in einen unabgebundenen, angemachte Beton, der nach der Abbindung eine Betonplatte (41) bildet, eingeführt wird, dass der punktförmige Bereich (15) des ersten Befestigungsbereichs (3) den Beton vollständig durchdringt und der Zwischenbereich (5) den Übergangsbereich (47) zwischen dem Beton und dem Holzbalken (39) überbrückt und
7.3 der Beton anschließend abbindet.

8. Bauelement in Form einer mit wenigstens einem Holzbalken (3) verbundenen Betonplatte (41), wobei der Holzbalken (39) und die Betonplatte (41) über wenigstens ein Befestigungsmittel (1) nach wenigstens einem der vorhergehenden Ansprüche 1-6 miteinander verbunden sind.

## Claims

1. A fastening means for fastening a wooden beam (39) and a concrete panel (41) to each other, which extends along an axis (A), having the following features:
1.1 a first fastening region (3) which can be fastened in a concrete panel (41) and is formed adjacently to a first axial end (9) of the fastening means;
1.2 a second fastening region (7) which can be fastened in a wooden beam (39) and is formed adjacently to a second axial end (11) of the fastening means, wherein
1.3 the first axial end (9) and the second axial end (11) form the two opposite ends of the fastening means;
1.4 an intermediate region (5), which is arranged between the first and second fastening regions (3, 7) and is formed to bridge the transition region (47) between the concrete panel (41) and the wooden beam (39), wherein
1.5 the first fastening region (3)
1.5.1 has a first section (13), which, proceeding from a point-shaped region (15) on the first axial end (9), widens in the direction of the second axial end (11), and
1.5.2 has a second section (19), which is arranged between the first section (13) and the second axial end (11) and tapers in the direction of the second axial end (11), and
1.5.3 has a third section (23), which is arranged between the second section (19) and the second axial end (11) and widens in the direction of the second axial end (11),
**characterised in that** the second section (19) tapers conically in the direction of the second axial end (11).

2. The fastening means according to Claim 1, in which the second and the third sections (19, 23) form outer faces, which are inclined with respect to the axis (A) at an angle in the range from 30 to 60°.

3. The fastening means according to at least one of the preceding claims, in which the outer contour of the second section (19) projects beyond the outer contour of the first region (3) and of the intermediate region (5) in the radial direction with respect to the axis (A).

4. The fastening means according to at least one of the preceding claims, in which the first fastening region (3) and the intermediate region (5) are formed from plastic.

5. The fastening means according to at least one of the preceding claims, in which the first fastening region (3) and the intermediate region (5) are connected monolithically to each other.

6. The fastening means according to at least one of the preceding claims, in which the first fastening region (3) and the intermediate region (5) have an outer contour formed rotationally symmetrically to the axis (A).

7. A method for fastening a wooden beam (39) and a concrete panel (41) to each other, wherein
7.1 the wooden beam (39) is first connected to the second fastening region (7) of the fastening means (1) according to at least one of the preceding claims,
7.2 the first fastening region (3) of the fastening means (1) is then introduced into an unset, mixed concrete, which after setting forms a concrete panel (41), in such a manner that the point-shaped region (15) of the first fastening region (3) completely penetrates the concrete and the intermediate region (5) bridges the transition region (47) between the concrete and the wooden beam (39) and
7.3 the concrete then sets.

8. A structural element in the form of a concrete panel (41) connected to at least one wooden beam (3), wherein the wooden beam (39) and the concrete panel (41) are connected to each other by means of at least one fastening means (1) according to at least one of the preceding Claims 1-6.

## Revendications

1. Moyen de fixation pour fixer une poutre en bois (39) et une plaque de béton (41) entre elles, qui s'étend le long d'un axe (A), comprenant les attributs suivants :
1.1 une première zone de fixation (3) qui peut être fixée dans une plaque de béton (41) et qui est formée dans le voisinage d'une première extrémité axiale (9) du moyen de fixation ;
1.2 une seconde zone de fixation (7) qui peut être fixée dans une poutre en bois (39) et qui est formée dans le voisinage d'une seconde extrémité axiale (11) du moyen de fixation, sachant que
1.3 la première extrémité axiale (9) et la seconde extrémité axiale (11) forment les deux extrémités opposées du moyen de fixation ;
1.4 une zone intermédiaire (5) disposée entre les première et seconde zones de fixation (3, 7), qui est formée pour combler la zone de transition (47) entre la plaque de béton (41) et la poutre en bois (39), sachant que
1.5 la première zone de fixation (3)
1.5.1. présente une première section (13) qui est formée en partant d'une zone formant un point (15) sur la première extrémité axiale (9), en s'élargissant en direction de la seconde extrémité axiale (11), et
1.5.2 présente une deuxième section (19) disposée entre la première section (13) et la seconde extrémité axiale (11), qui est formée en se rétrécissant en direction de la seconde extrémité axiale (11), et
1.5.3 présente une troisième section (23) disposée entre la deuxième section (19) et la seconde extrémité axiale (11), qui est formée en s'élargissant en direction de la seconde extrémité axiale (11),
**caractérisé en ce que** la deuxième section (19) est formée en se rétrécissant de façon conique en direction de la seconde extrémité axiale (11).

2. Moyen de fixation selon la revendication 1, dans lequel les première et deuxième sections (19, 23) forment des surfaces extérieures qui sont inclinées dans un angle situé dans la plage de 30 à 60° par rapport à l'axe (A).

3. Moyen de fixation selon au moins l'une des revendications précédentes, dans lequel le contour extérieur de la deuxième section (19) dépasse du contour extérieur de la première zone (3) et de la zone intermédiaire (5) dans le sens radial par rapport à l'axe (A).

4. Moyen de fixation selon au moins l'une des revendications précédentes, dans lequel la première zone de fixation (3) et la zone intermédiaire (5) sont en plastique.

5. Moyen de fixation selon au moins l'une des revendications précédentes, dans lequel la première zone de fixation (3) et la zone intermédiaire (5) sont reliées de façon monolithique entre elles.

6. Moyen de fixation selon au moins l'une des revendications précédentes, dans lequel la première zone de fixation (3) et la zone intermédiaire (5) présentent un contour extérieur formé en symétrie de rotation par rapport à l'axe (A).

7. Procédé de fixation d'une poutre en bois (39) et d'une plaque de béton (41) entre elles, dans lequel
7.1 la poutre en bois (39) est d'abord reliée à la seconde zone de fixation (7) du moyen de fixation (1) selon au moins l'une des revendications précédentes,
7.2 la première zone de fixation (3) du moyen de fixation (1) est ensuite introduite de telle sorte dans un béton gâché non pris qui forme une plaque de béton (41) après la prise, que la zone formant un point (15) de la première zone de fixation (3) traverse le béton complètement et la zone intermédiaire (5) comble la zone de transition (47) entre le béton et la poutre en bois (39) et
7.3 enfin, le béton prend.

8. Elément de construction ayant la forme d'une plaque de béton (41) reliée à au moins une poutre en bois (39), dans lequel la poutre en bois (39) et la plaque de béton (41) sont reliées entre elles par au moins un moyen de fixation (1) selon au moins l'une des revendications précédentes 1 à 6.
